# EUROPEAN PATENT APPLICATION

(11) **EP 1 690 786 A2**
(43) Date of publication of application: **16.08.2006**
(21) Application number: 06101458.5
(22) Date of filing: 09.02.2006
(51) Int. Cl.: B64C 11/02, E03F 1/00

(54) **Launch and retract modules for aerial target launcher**

(30) Priority: 09.02.2005 US 651405 P
(71) Applicant: Midwest Brake Bond Co., Warren, MI 48089 (US)
(72) Inventor: Sommer, Gordon M., 48170, Plymouth (US)
(74) Representative: Skagersten, Thomas

(57) **Abstract**

A launch and retract module (100) for an aerial target (101) wherein the aerial target (101) to be launched is placed on a cart (102) that is at one end of an inclined track (104). The cart (102) is connected by cable (103) on one side to the launch module (105) and to the other side to the retract module (106). The cable (103) winds onto the launch module (105) spool during the launch cycle while it unwinds from the retract module (106) spool. After launch, the cart (102) is returned to its initial position; ready for loading of another target, by the retract module (106).

## Description

### FIELD OF THE INVENTION

The present invention relates to the launching means for aerial targets used in military defense training.

### BACKGROUND OF THE INVENTION

Aerial targets for missiles are used extensively around the world by the military to develop a missile system and to train military operating personnel. The training and qualification of launch crews is an ongoing requirement. The aerial targets used have a small turbine engine that will keep them airborne until the onboard fuel is depleted. These engines are not powerful enough however, to get the aerial targets airborne. Presently, a rocket (RATO bottle) is used to launch the targets. These rockets are very expensive and the military is exploring other methods of launching these aerial targets. The present invention is for the launch and retract modules of a rotary stored energy launching system.

### SUMMARY OF THE INVENTION

An object of the present invention is to address drawbacks related to the launching of aerial targets.

This and other objects are achieved by a flywheel/clutch assembly, launching module and retract module as defined in the independent claims. Various embodiments are defined in the dependent claims.

The aerial target to be launched is placed on a cart that is at one end of an inclined track. The can is connected by cable on one side to the launch module and to the other side to the retract module. The cable winds onto the launch module spool during the launch cycle while it unwinds from the retract module spool. After launch, the cart is returned to its initial position; ready for loading of another target, by the retract module.

An electric motor accelerates a 6-foot diameter flywheel weighing 20 tons. The outside diameter of the flywheel is traveling 300 miles per hour when the correct speed in achieved. This acceleration time takes approximately one hour using a 100 horsepower motor. Two oil-shear clutches mounted within the flywheel apply 17,000 horsepower to the launch spool so the target reaches a take-off speed of 357 feet/second (243 miles/hour) in approximately 3 seconds. The flywheel slows down approximately 20 percent during this time. Two oil-shear brakes (one on the launch module and the other on the retract module) stops the system in ¾ seconds. The start of braking separates the target from the cart. A launch can be achieved every 30 minutes. The high degree of innovation required to achieve this kind of performance with the requisite precision, durability and economy of operation will become apparent as the launch and retract modules are described hereafter.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The present invention will become more fully understood from the detailed description and the accompanying drawings, wherein:

Figure 1 is a general elevation view of the aerial target launcher.

Figure 2 is a cross-sectional view of the launch module.

Figures 3, 3A and 3B are partial cross-sectional views of the launch module.

Figures 4 and 5 show the motor drive of the launch module.

Figure 6 is a cross-sectional view of the retract module.

Figures 7, 7A and 7B are schematics of the oil system for the launch module.

Figures 8 and 8A are schematics of the oil system for the retract module.

### DETAILED DESCRIPTION OF THE PREFERRED EMBODIMENTS

The following description of the preferred embodiment(s) is merely exemplary in nature and is in no way intended to limit the invention, its application, or uses.

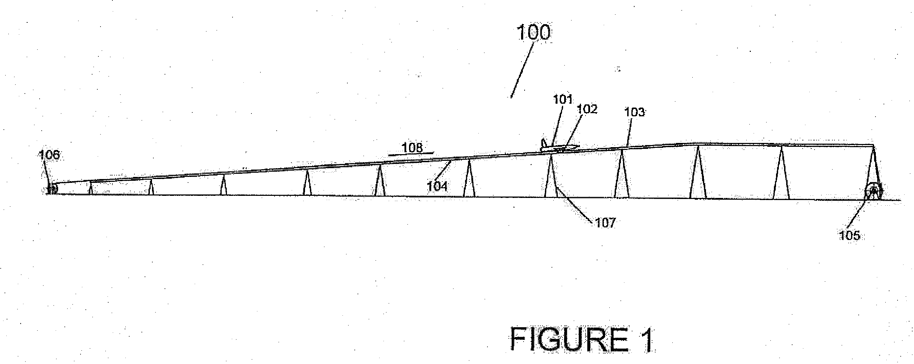

Figure 1 shows an elevation view of target launcher 100. Target 101 is shown partially through the launch stroke. Target 101 is placed on cart 102 before launch occurs. The cart is connected on the leading edge to launch module 105 by cable 103. Cart 102 is also connected on the trailing edge to retract module 106. Said cart is supported and guided by track 104 that is supported by towers 107. Launch module 105 pulls cable 103 is the direction of arrow 108 for launching. Retract module 106 pulls cable 103 in the opposite direction to return cart 102 to its initial launch position.

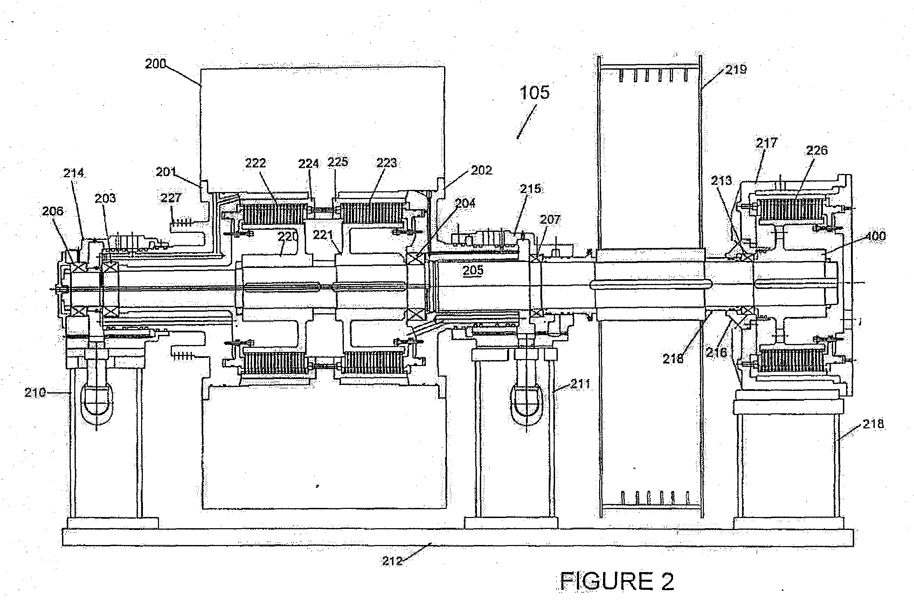

Figure 2 is a cross-sectional view of launch module 105. Sheave 227 is integral with the outboard quill 201 and is connected to the motor used to accelerate flywheel to proper speed by V belts. Outboard quill 201 and inboard quill 202 support flywheel 200. Spherical bearings 203 and 204 that mount on driveshaft 205 support quills 201 and 202. Spherical bearings 206, 207 and 213 support driveshaft 205. Split housing 214 supports spherical bearing 206. Split housing 215 supports spherical bearing 207 and bearing housing 216 supports spherical bearing 213. Bearing housing 216 is supported by brake housing 217. Brake housing mounts on and is supported by riser bracket 218. Split housing 215 mounts on and is supported by riser bracket 211. Split housing 214 mounts on and is supported by riser bracket 210. Riser brackets 210, 211 and 218 mount on base plate 212.

Clutch drive rings 224 and 225 are bolted to flywheel 200 and transmit torque from said flywheel to steel discs that are contained in disc packs 222 and 223. Clutch drive rings 224 and 225 have internal involute gear teeth and mate with the gear teeth of the steel discs. Torque is transmitted from the steel discs to bronze discs (bronze faced steel) that are also contained within disc packs 222 and 223. The bronze discs have internal involute gear teeth and mate with the external teeth of clutch drive hubs 220 and 221. Clutch drive hubs 220 and 221 transmit torque from disc packs 222 and 223 respectively to driveshaft 205. Driveshaft 205 drives launch spool 219 mounted onto said driveshaft. Cable (not shown) wraps around launch spool 219 and is connected to the cart (Figure 1).

Brake drive ring 226 is bolted to the stationary brake housing 217. The brake disc stack is the same as just described for the clutches. Stopping torque provided by the brake disc stack is transmitted to driveshaft 205 by brake hub 222.

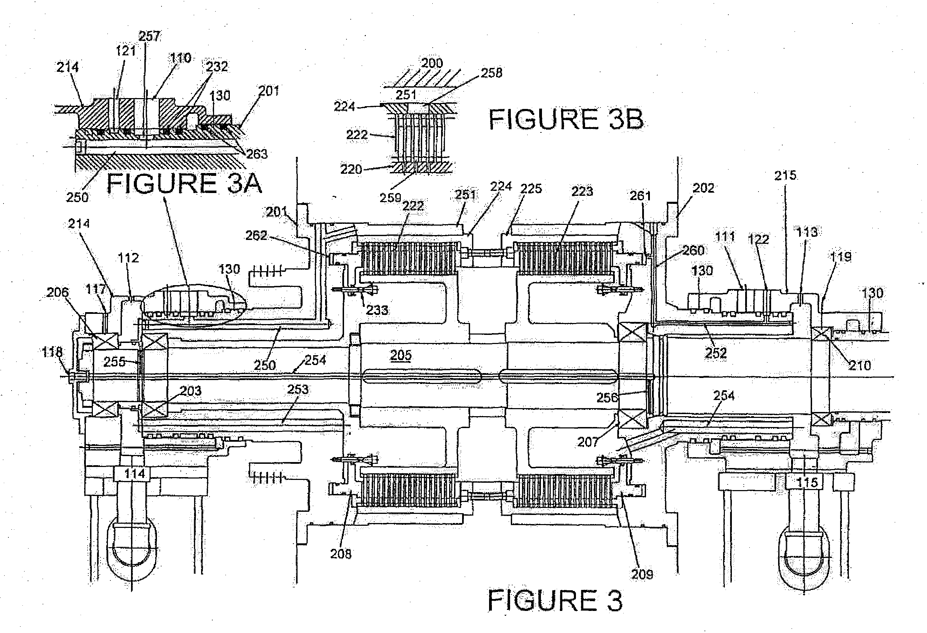

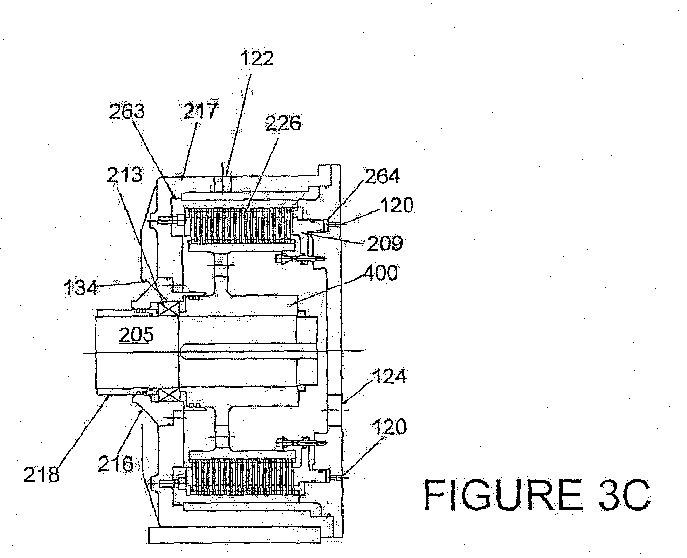

Figure 3 is a cross-sectional view of the flywheel and clutches that are part of the launch module. Cooling oil flows through the clutch packs 222 and 223 in one direction during the clutch engagement cycle that starts just before the clutches are engaged and continues for 5 minutes after they are disengaged. An oil mist is used in the opposite direction at all other times.

Cooling oil enters ports 110 and 122 contained in housings 214 and 215 during the engagement cycle just described. The oil flows from these ports that are in stationary parts to quills 201 and 202 that rotate with the flywheel. Quills 201 and 202 employ piston rings 232 for sealing members for all oil flows. Oil enters quills 201 and 202 through holes 257. It then flows through holes 250 to cavities 251. These cavities are completely closed flywheel 200, quills 201 and 202, and drive rings 224 and 225 when pistons 208 and 209 are pressurized. Drive rings 224 and 225 have slots 258 so the oil can enter this disc packs. The oil has no place to go except through disc packs 222 and 223. The oil exits the disc packs through holes 259 in clutch hubs 220 and 221. The heat generated by clutch engagement is absorbed by the disc packs and the oil flow through the disc packs. The clutches are engaged for approximately 3 seconds. During this 3 seconds, the oil flow rate through each clutch is 175 gallons per minute or a total of 350 gallons per minute. Oil flow grooves in alternate discs of the clutch packs will not allow this rate of oil flow so the discs separate approximately a very small distance. To do this, the pressure of said oil flow must be equal to the pressure at which disc packs 222 and 223 are compressed. Instead of having a pump and motor of the capacity to produce the required pressure and flow for the 3 second engagement time, accumulators are used. Orifices control the flow rate. Since the pressure is higher when the accumulators start to unload oil, the flow rate will be higher than what it is later. This is exactly what is wanted since the heat rate is the highest when clutch engagement first starts.

Cooling oil flow through a disc pack is conventionally from the inside of the disc pack instead of from the outside as with the present invention. Since the oil flow with the present invention must overcome the centrifugal force of the oil due to rotation of the parts, the uniform distribution of the oil flow through all discs is much better than with the conventional method.

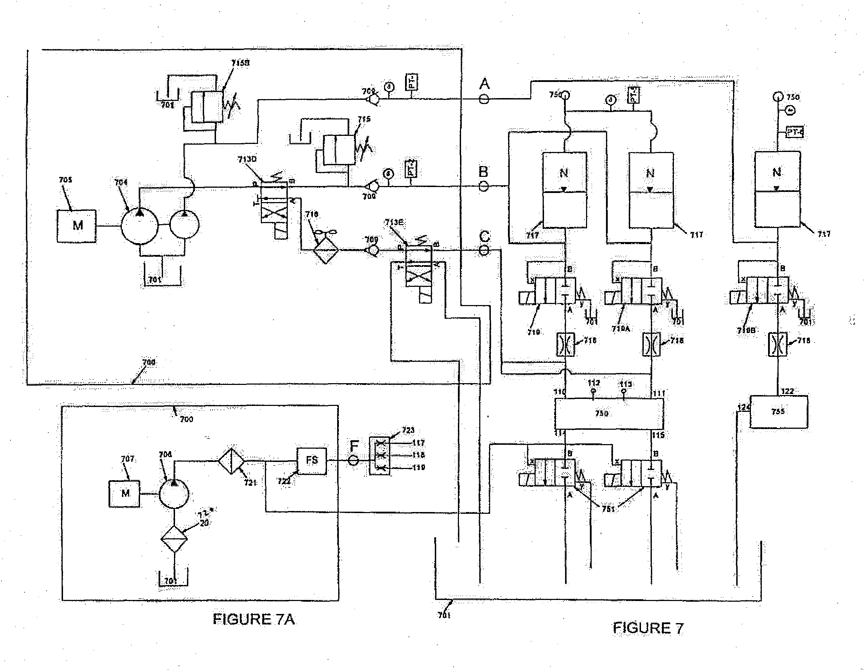

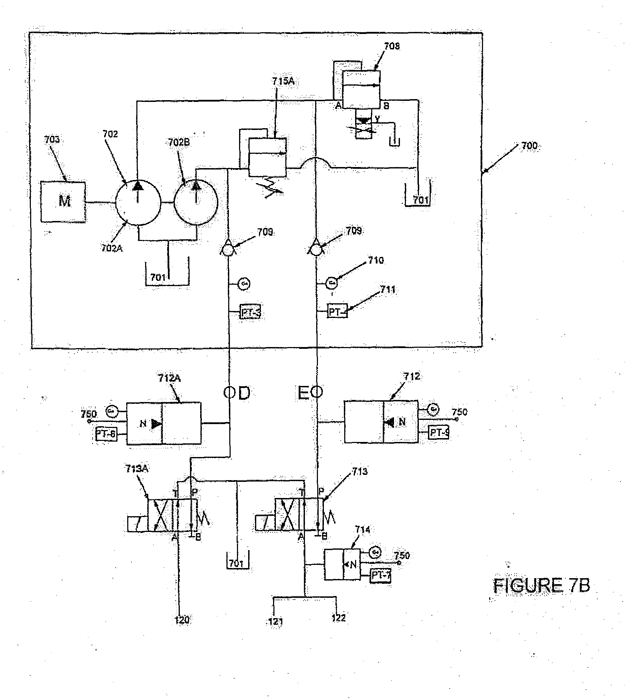

The cooling oil exits the flywheel/clutch assembly to housings 214 and 215 through holes 253 in quill 201 and holes 254 in quill 202. Ports 114 and 115 are connected to the oil tank through 2-way valves 751 (Figure 7) that are open for free flow during the launch cycle. These 2-way valves are closed and ports 110 and 122 are opened to tank by 4-way valve 713E (Figure 7) after the launch cycle is completed.

The flywheel/clutch assembly is full of oil after the launch cycle is complete. If a low volume of cooling oil flow is continued, the assembly will always be full of oil. Being full of oil, the high torque and high speed combination of the clutches means that the drag torque of the discs when the clutches are disengaged is relatively high. The increase of motor horsepower required and the extra heat exchange capability of the system was deemed inappropriate in this application. This is the reason for the change in oil flow direction.

The lubrication oil circuit is always operational when the flywheel is rotating and is the only circuit providing oil to the flywheel/clutch assembly when the launch cycle is not operational. This circuit provides lubrication to bearing 206 through port 117 and to bearing 207 through port 119. Most of the oil from the lubrication circuit enters driveshaft 205 from port 118. Holes 255 and 256 connect to hole 254 in the driveshaft and have metering orifices in the pipe plugs in said holes. Oil from hole 255 passes through bearing 203 and oil from hole 256 passes through bearing 207. Low pressure air is injected into the assembly through ports, 112 and 113 which evacuates the oil from the flywheel cavity. The passage of oil through bearings 203 and 207 tends to atomize it. Said injected air further atomizes the oil. The function of the air pressure is to evacuate most of the oil after the completion of the launch cycle. The result is a light mist of oil passing through the discs to keep them lubricated. This light oil mist does not increase the drag of the discs appreciably over what discs operating dry would have and increases their life significantly.

Springs 233 are used to retract the pistons 208 and 209 from the positions shown in Figure 3 and disengage the clutches. To engage the clutches, actuation oil enters port 121 in housing 214 and 111 in housing 215. It then goes to holes 252, which are in both quills 201 and 205 and connects with holes 260 to introduce oil in piston chambers 261 and 262.

Piston rings are used for taconite seals with grease in between the rings. An example of this usage in the present patent is shown in Figure 3A. Piston rings 263 fit into grooves in quill 201. High temperature grease is periodically injected between the rings through port 130.

Figure 3C is an enlarged cross-section of the brake on the launch module. Disc pack 226 and ancillary parts 263 and 209 are identical to equivalent parts used in the clutches. Brake hub 400 is the same except for the rib and hub. Cooling oil flow enters the brake housing through port 122 and exits through port 124. Brake actuation oil enters chamber 264 through ports 120. Spherical bearing 213 is grease lubricated. Port 134 is used to inject high temperature grease into bearing.

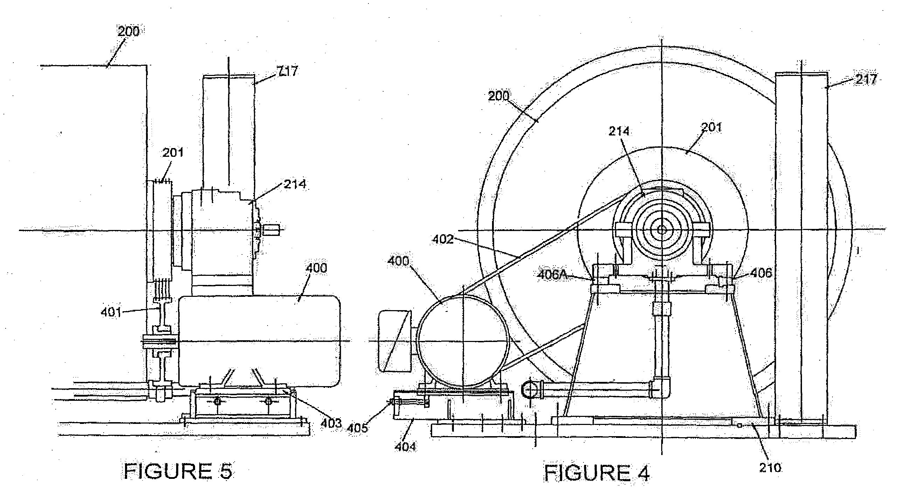

Figures 4 and 5 show the motor drive to the flywheel. Sheave 401 is mounted on the shaft of main motor 400. V-belts 402 connect it to sheave portion of outboard quill 201. Said motor mounts to sliding plate 403 that is supported by motor base 404. Screws 405 are used to adjust motor position and to tighten v-belts 402. The end view of outboard split housing 214 and outboard bracket 210 are shown. Spacers 406 and 406A are used so V-belts can be replaced easily. The vertical mounting of a cooling oil accumulator 717 is also shown.

The horsepower of the electric motor is small relative to the inertia of the flywheel and the torque rating of the clutches. This is accomplished by using an inverter drive for the electric motor with the acceleration ramp defined by a separate PLC (programmable logic controller) and the aerated oil flow through the discs of the clutches when the clutches are not engaged.

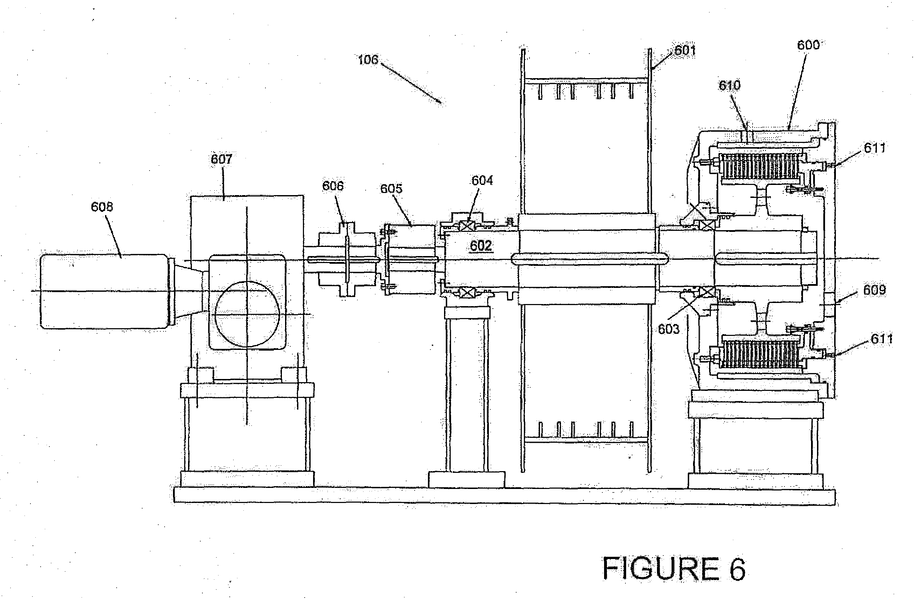

Figure 6 shows the retract module 106. Its purpose is to stop spool 601, launch cart 102 and tow cable 103 (Figure 1) and to retract launch cart to its starting position for the next launch. Retract brake 600 is identical to the launch brake. One-way (overrunning) clutch 605 free wheels in the launching direction and engages in the opposite direction for retract. Flexible gear coupling 606 connects clutch 605 with worm-gear reducer 607 that is driven by motor 608. Typical retract time is for example about 5 minutes. Bearings 603 and 604 are lubricated with high-temperature grease. Cooling oil enter brake 600 through port 610 and exits to tank through port 609. Actuation oil uses ports 611.

Figures 7, 7A and 7B are the hydraulic schematics for the launch module. Large dots labeled A.....F show the connect points between components on the oil tank and those on the launch module. All components shown within the dotted lines 700 are mounted on common tank 701. All valves are shown in their de-energized position.

Figure 7 is the schematic of the cooling circuit for the launch module. Accumulators 717 are loaded with nitrogen at the specified pressure through connections 750. Dual pump 704 is driven by motor 705. One section of the dual pump 704A provides oil pressure to the accumulators that control the cooling oil pressure to the clutches 750. Relief valve 715 controls the starting pressure. 2-way solenoid operated valves 719 and 719A are energized to start a high volume of oil passing through the clutch stacks. Orifice plates 718 control the flow rate. These flows enter the split housings 214 and 215 at ports 110 and 111. The return oil from the clutches is through ports 114 and 115. 2-way solenoid valves 751 are energized at the same time as valves 719 and 719A to allow the oil to return to tank 701. 4-way solenoid operated valve 713D is energized at the same time as the 2-way valves. Check valves 709 keeps the oil in the accumulators from returning to tank. The shifting of valve 713D (energized) directs flow from pump 704A to heat exchanger 716. A low volume of oil continues to pass through 4-way solenoid operated valve 713E for a period of time after launch has been completed to extract heat from clutch disc stacks 223 and 224. The direction of oil flow is reversed after the heat is extracted by energizing valve 713E and de-energizing 2-way valves 751. 2-way valves 719 and 719A are de-energized at the same time. Low-pressure air is injected into the split housings at this time through ports 112 and 113.

Pump section 704B of the dual pump provides oil pressure to the accumulator 717 that controls cooling oil pressure to brake 755. Relief valve 715B controls the starting pressure. A check valve 709 keeps pressure in the oil section of the accumulator. 2-way valve 719B is energized when the aerial target passes sensors in the launch track to stop the clutch elements attached to driveshaft 205 and spool 219 (Figure 2). An orifice plate 718 controls the rate of oil flow to port 122 of said brake. Cooling exits brake to tank 701 through port 124.

Figure 7A is the schematic of the lubrication circuit for the launch module. This circuit is active whenever the flywheel is rotating. It provides lubrication to bearings 203, 206, and 210. It also provides lubrication for disc stacks 222 and 223 as described heretofore. Vane pump 706 provides the lubrication pressure and is driven by motor 707. After passing through filter 721 and pressure switch 722, lubrication oil enters orifice manifold 723 that determines the flow rates to ports 117, 118 and 119 (Figure 3).

Figure 7B is the schematic of the actuation circuit for the launch module. Dual vane pump 702 is driven by motor 703. Pump section 702A provides oil for the actuation of the clutches. Electronically controlled pressure relief valve 708 controls the actuation pressure. Several different aerial targets are launched each with a different weight and required launch velocity. The operator of the equipment enters the specific target to be launched in the control computer and relief valve 708 automatically adjusts the pressure. This is the pressure used to fill the oil section of accumulator 712. The clutches are engaged to start the launch by energizing 4-way solenoid operated valve 713. The output from this valve enters ports 121 and 122 (Figure 3). Accumulator 712 is used to rapidly engage the clutches and accumulator 714 slightly softens the initial clamping pressure of disc stacks 22 and 223 so as not to exceed the maximum G loading allowed for the targets.

Pump section 702B provides oil for the actuation of the launch module brake. Relief valve 715A controls the actuation pressure. Energizing 4-way solenoid operated valve 715A actuates said brake. Accumulator 712A is used to provide rapid engagement of the brake.

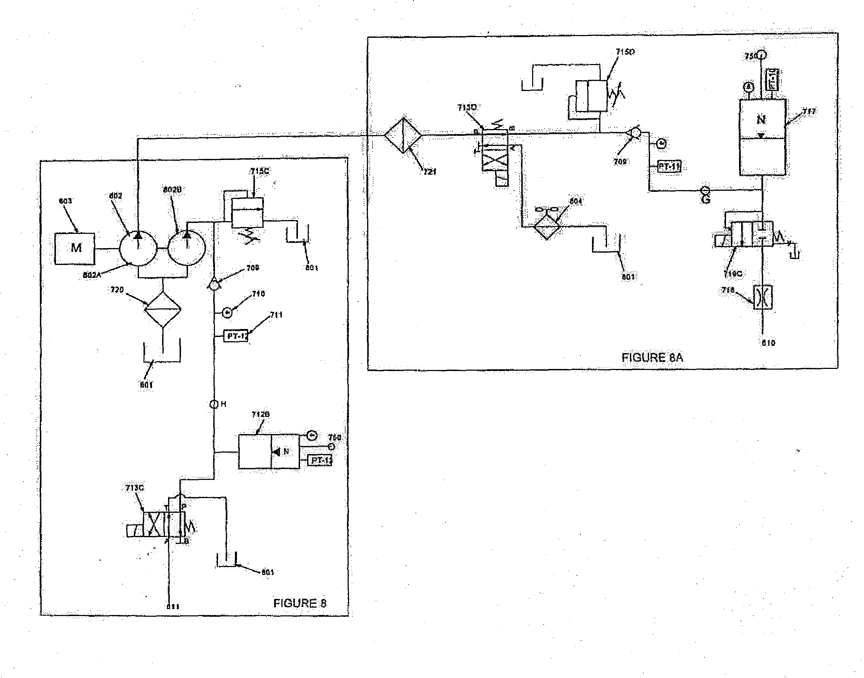

Figure 8 and 8A are the hydraulic schematics for the retract station. Large dots G and H show connect points between components on the oil tank and those on the retract module, wherein all valves are shown in their de-energized position. Dual vane pump 802 provides hydraulic pressure for the actuation and cooling circuits for the retract brake and is driven by motor 803. One section of the pump 802A provides pressure for the cooling circuit. With 4-way solenoid operated valve 713D de-energized, accumulator 717 is loaded by pressure determined by relief valve 715D. High volume cooling oil flows to the brake through orifice plate 718 when 2-way solenoid operated valve 719C is energized. This flow enters brake through port 610 (Figure 6). Flow from pump section 802A is directed through air-to-air heat exchanger 804 when valve 713D energized into tank 801.

Pump section 802B provides pressure for the actuation circuit. The pressure to the oil side of accumulator 712B is controlled by relief valve 715C. Said accumulator is used to provide rapid engagement of the brake. This engagement occurs when 4-way solenoid operated valve 713C is energized.

The description of the invention is merely exemplary in nature and, thus, variations that do not depart from the gist of the invention are intended to be within the scope of the invention. Such variations are not to be regarded as a departure from the spirit and scope of the invention.

## Claims

1. A flywheel/clutch assembly consisting of:
flywheel,
two oil-shear clutches mounted within cavity of flywheel,
flanges mounted to both sides of flywheel with cylindrical extensions extending
outward from flywheel, and
bearings mounted in cylindrical extension to support flywheel on a driveshaft.

2. Flywheel/clutch assembly of Claim 1, wherein a stationary cylindrical housing concentric with cylindrical extensions of flanges mounted to flywheel and disposed radially outward from said extension that contain ports to accept cooling oil and actuation oil and to provide drain from flywheel cavity to an oil tank.

3. Flywheel/clutch assembly of Claims 1 and 2, wherein the flanges mounted to flywheel with cylindrical extension contains passages to direct cooling oil, actuation oil and drain oil to and from flywheel cavity and oil-shear clutches with means to seal the oil as it passes from stationary housing to rotating cylindrical extension.

4. Flywheel/clutch assembly of Claim 2 or 3, wherein stationary cylindrical housing will restrain flywheel in the event driveshaft breaks due to overload, etc.

5. Flywheel/clutch assembly of any one of the preceding claims, wherein the cooling passes between each set of driver and driven discs from the outer diameter of the discs to the inner diameter when the clutches are engaged and whose pressure is the same as the pressure clamping the discs together to transmit torque.

6. Flywheel/clutch assembly of Claim 5, wherein the main cooling oil flow is stopped after the clutch is disengaged, said cooling oil flow being replaced by a low volume of aerated oil that passes through the clutch discs from the inside diameter to the outside diameter of the clutch discs to decrease the residual drag of discs when the flywheel is rotating and the driveshaft is stopped.

7. Flywheel/Clutch assembly of claim 5 or 6, wherein air pressure used to aerate the oil flowing from the inside diameter of discs to the outside diameter is high enough to force the oil that fills the cavity of the flywheel/clutch assembly to exit said cavity and return to oil tank.

8. The flywheel/clutch assembly of any one of the preceding claims, wherein a small electric motor is utilized relative to the inertia of a flywheel of a flywheel/clutch assembly to accelerate the flywheel.

9. The flywheel/clutch assembly of Claim 8, wherein an inverter drive for the electric motor with the acceleration ramp defined by a separate PLC (programmable logic controller) is used.

10. The flywheel/clutch assembly of Claim 8 or 9 wherein the horsepower of said motor is reduced by aerated oil that passes through the clutch discs according to Claim 6.

11. The Flywheel/Clutch assembly of any one of the preceding claims, wherein an oil/nitrogen accumulator is used to provide a high oil flow rate through the discs of an oil shear clutch that accelerates a high kinetic energy load over a very short time thus reducing the size of the cooling pump and its driving motor.

12. The Flywheel/Clutch assembly of any one of the preceding claims, wherein an oil/nitrogen accumulator is used to provide rapid engagement of a clutch that is modified by another oil/nitrogen accumulator to soften the initial engagement of said clutch.

13. The Flywheel/Clutch assembly of any one of the preceding claims, wherein an oil/nitrogen accumulator is used to provide rapid engagement of a brake.

14. The Flywheel/Clutch assembly of any one of the preceding claims in association with a launching module used on aerial target launcher consisting of:
small electric motor with special controls to accelerate flywheel,
flywheel,
two oil-shear clutches mounted within cavity of flywheel,
oil-shear brake,
spool to drive launching cable,
driveshaft connecting clutches, brake and spool,
enveloping housings to support driveshaft, and
oil system to provide cooling oil flow and actuation oil.

15. The Flywheel/Clutch assembly in association with a launching module of Claim 14 wherein enveloping housings supply actuation oil and cooling oil to clutches mounted within flywheel and provide for same to be returned to oil tank.

16. The Flywheel/Clutch assembly in association with a launching module of Claim 14 or 15, wherein enveloping housing will restrain flywheel in the event driveshaft breaks due to overload, etc.

17. The Flywheel/Clutch assembly in association with a launching module of any one of Claims 14-16, wherein flanged quills support flywheel and provide ingress and egress of cooling and actuation oils to and from flywheel cavity.

18. The Flywheel/Clutch assembly in association with a launching module of any one of Claims 14-17, wherein cooling oil flow from the outside diameter of clutch discs during the launching cycle is changed to mist lubrication from the inside diameter of clutch discs at all other times.

19. The Flywheel/Clutch assembly in association with a launching module of any one of Claims 14-18, wherein oil/nitrogen accumulators provide a high oil flow rate through the clutch discs during the launch cycle with the use of relatively small pump and motor.

20. The Flywheel/Clutch assembly in association with a launching module of any one of Claims 14-19 wherein an oil/nitrogen accumulator provides rapid engagement of clutch to begin launch cycle and is buffered by another oil/nitrogen accumulator to soften the initial engagement of said clutch.

21. The Flywheel/Clutch assembly in association with a launching module of any one of Claims 14-20, wherein an oil/nitrogen accumulator provides rapid engagement of brake to stop.

22. The Flywheel/Clutch assembly of any one of claims 1-13 in association with a retract module used on aerial target launcher to stop a retract spool, launch cart and tow cable and to return these elements to starting position for next launch, said retract module consisting of:
oil-shear brake
one-way clutch
retract spool
driveshaft connecting brake, clutch and retract spool flexible coupling,
gear reducer
electric motor, and
oil system.

23. The Flywheel/Clutch assembly in association with a retract module of claim 22, wherein one-way clutch free-wheels during launching of aerial target and drives retract spool during the retract cycle.

24. The Flywheel/Clutch assembly in association with a retract module of claim 22 or 23, wherein an electric motor drives gear reducer that provides the proper retract speed to retract spool.
